Europäisches Patentamt

European Patent Office

Office européen des brevets

(11) Numéro de publication: **0 236 239**
A1

## DEMANDE DE BREVET EUROPEEN

(21) Numéro de dépôt: 87420008.2

(22) Date de dépôt: 09.01.87

(51) Int. Cl.⁴: **F 02 N 15/06,** F 02 N 11/00, H 02 K 23/66, H 02 K 23/18

(30) Priorité: **12.02.86 FR 8602350**

(43) Date de publication de la demande: **09.09.87** **Bulletin 87/37**

(84) Etats contractants désignés: **DE ES GB**

(71) Demandeur: **Société de PARIS et du RHONE, 36, avenue Jean Mermoz, F-69008 Lyon (FR)**

(72) Inventeur: **Mazzorana, Alfred Bruno, 12 rue Fernand Léger, F-69200 Venissieux (FR)**

(74) Mandataire: **Bratel, Gérard et al, Cabinet GERMAIN & MAUREAU Le Britannia - Tour C 20, boulevard E. Deruelle, F-69003 Lyon (FR)**

(54) Démarreur électrique à réducteur épicycloidal.

(57) L'arbre (10) du moteur électrique (1) entraîne en rotation l'arbre (12) du lanceur (3) par l'intermédiaire d'un réducteur épicycloïdal (2). Le moteur (1) comporte un collecteur (9) situé du côté du réducteur (2), des balais (23) étant pressés sur le collecteur (9) par des ressorts spiraux (25). La couronne externe (19) du réducteur occupe une position angulaire variable, ajustée automatiquement en fonction du couple demandé (C); par l'intermédiaire d'une denture intérieure supplémentaire (31) et de pignons (30), cette couronne (9) modifie la tension des ressorts (25), et asservit ainsi la pression (F) des balais (23) sur le collecteur (9).

Application: démarreurs de véhicules automobiles.

1

## "Démarreur électrique à réducteur épicycloïdal"

La présente invention concerne un démarreur électrique à réducteur épicycloïdal, pour le lancement d'un moteur à combustion interne et, plus particulièrement, d'un moteur de véhicule automobile.

Dans les démarreurs pour moteurs de véhicules automobiles, un moteur électrique entraîne en rotation un dispositif dit "lanceur", comportant un pignon qui, au moment de l'utilisation du démarreur, est amené généralement par un mouvement axial en prise avec une couronne dentée de démarrage appartenant au moteur à combustion interne. Le lanceur est entraîné en rotation soit directement à partir du moteur électrique, soit par l'intermédiaire d'un réducteur de vitesse à engrenages, intercalé entre l'arbre du moteur électrique et un autre arbre portant le lanceur. L'interposition d'un réducteur de vitesse permet d'utiliser dans le démarreur un moteur électrique plus rapide, et d'obtenir un couple de démarrage plus élevé, tout en réduisant l'encombrement et le poids du démarreur pour une puissance donnée.

L'invention décrite ci-après intéresse uniquement les démarreurs dans lesquels le réducteur de vitesse est constitué par un train d'engrenages de type épicycloïdal. Dans un démarreur pourvu de ce genre de réducteur, l'arbre du moteur électrique est coaxial à l'arbre du lanceur. L'un de ces arbres porte un pignon central ou "planétaire", en prise avec plusieurs pignons satellites qui sont montés sur un porte-satellites calé sur l'autre arbre. Les pignons satellites sont aussi en prise avec une couronne à denture intérieure, qui est habituellement fixe.

Par ailleurs, le moteur électrique d'un démarreur est le plus souvent un moteur électrique avec collecteur du type "tambour", contre lequel sont appliqués deux ou plusieurs balais. Chaque balai peut être poussé radialement, en direction du collecteur, au moyen d'un ressort spiral, comportant une partie extérieure appliquée contre le balai associé, et une partie enroulée en spirale autour d'un axe décalé latéralement par rapport au balai associé ; la spire la plus intérieure de la partie du ressort enroulée en spirale est accrochée sur un organe de retenue, tel qu'un petit axe, qui habituellement est lié rigidement au porte-balais. La pression des balais sur le collecteur est ainsi une caractéristique donnée initialement qui, même si elle peut être ajustée au moment de la construction du démarreur, ne peut être modifiée en cours de fonctionnement.

Or les balais occasionnent, par leur pression sur le collecteur, des

pertes mécaniques par frottement, qui peuvent être nuisibles ou, au contraire, avoir une utilité dans certaines conditions de fonctionnement. Ainsi, il peut être souhaitable de minimiser ces pertes mécaniques, pour rendre le moteur électrique apte à une meilleure accélération tout en recherchant un moindre échauffement, en conservant évidemment une pression des balais suffisante pour le bon fonctionnement de la commutation assurée par le collecteur. A l'inverse, une augmentation de la pression des balais peut être souhaitée, si l'on recherche une vitesse à vide plus faible et un freinage du rotor plus efficace.

La présente invention fournit une solution technique permettant d'ajuster automatiquement à tout moment la pression des balais en fonction des conditions de fonctionnement, notamment en fonction du couple demandé, dans le cas d'un démarreur avec réducteur épicycloïdal et avec moteur électrique ayant son collecteur situé du côté du réducteur.

A cet effet, l'invention a pour objet un démarreur qui comprend un moteur électrique entraînant en rotation un lanceur par l'intermédiaire d'un réducteur de vitesse comprenant un planétaire engrenant avec des satellites liés à un porte-satellites et eux-mêmes en prise avec une denture intérieure d'une couronne externe, le planétaire et le porte-satellites étant portés l'un par l'arbre du moteur électrique et l'autre par l'arbre du lanceur, l'arbre du moteur électrique portant, du côté du réducteur, un collecteur sur lequel sont appliqués des balais poussés par des ressorts, ce démarreur étant caractérisé par le fait que la couronne externe du réducteur épicycloïdal est montée tournante autour de son axe et se trouve accouplée, d'une part, à des moyens sensibles au couple demandé au moteur électrique, et d'autre part, au support des balais et/ou de leurs ressorts, de manière à modifier la pression des balais sur le collecteur par l'intermédiaire d'une rotation de ladite couronne, en fonction du couple demandé au moteur électrique.

Ainsi, en fonction du couple à fournir, la couronne externe du réducteur épicycloïdal, prévue rotative et non pas fixe comme dans les réalisations classiques, occupe une position angulaire d'équilibre qui varie et qui, elle-même, modifie la force de poussée des ressorts sur les balais associés, donc la pression de ces balais sur le collecteur, en réalisant ainsi un asservissement de la pression des balais en fonction du couple à fournir. Les pertes mécaniques peuvent être de cette manière ajustées, le choix de la pression optimale des balais et du sens de variation de cette pression dépendant des critères retenus et du fonctionnement désiré.

Ainsi, selon une première possibilité, la couronne externe du réducteur épicycloïdal est accouplée aux ressorts associés aux balais de telle sorte qu'une diminution du couple demandé au moteur électrique s'accompagne d'une diminution de la pression des balais sur le collecteur, ce qui minimise les frottements et l'échauffement, tout en permettant une accélération meilleure ; même réduite, la pression des balais sur le collecteur doit, bien entendu, être maintenue à une valeur suffisante pour conserver un fonctionnement électrique correct.

Selon une autre possibilité, la couronne externe du réducteur épicycloïdal est accouplée aux ressorts associés aux balais de telle sorte qu'une diminution du couple demandé au moteur électrique s'accompagne, au contraire, d'une augmentation de la pression des balais sur le collecteur. L'effet de freinage est ainsi renforcé, ce qui peut éviter une vitesse de rotation du moteur trop élevée lors d'un fonctionnement à vide.

Dans le cas de balais poussés contre le collecteur du moteur électrique au moyen de ressorts spiraux ayant chacun une extrémité accrochée sur un axe, l'accouplement avec la couronne extérieure du réducteur épicycloïdal est réalisable en prévoyant que chaque axe, auquel est accroché un ressort spiral, est monté tournant sur le porte-balais et porte un pignon, tous les pignons étant en prise avec une denture intérieure supplémentaire de la couronne du réducteur. La rotation de cette couronne provoque ainsi une rotation de sens correspondant des pignons et des axes des ressorts spiraux, entraînant soit une augmentation, soit une diminution de la tension des ressorts. L'effet produit est simultané, de même sens et de même amplitude pour tous les ressorts, donc pour tous les balais, quel que soit leur nombre.

Selon encore une autre possibilité, la couronne externe du réducteur épicycloïdal est accouplée aux supports des balais et de leurs ressorts, de manière à modifier simultanément la pression des balais sur le collecteur et la position angulaire de ces balais, en fonction du couple demandé au moteur électrique. La variation de la pression des balais est ainsi combinée avec une modification de la position angulaire de ces balais. Ceci peut être obtenu en prévoyant que le porte-balais est monté tournant autour de l'axe du moteur électrique et est pourvu d'une denture coaxiale, au moins un pignon intermédiaire étant en prise d'une part avec cette dernière denture, et d'autre part avec la denture intérieure supplémentaire

4

de la couronne externe du réducteur épicycloïdal, de manière à déplacer angulairement le porte-balais en fonction du couple demandé. Dans une forme de réalisation avantageuse, l'axe du ou de chaque pignon intermédiaire, servant ainsi à déplacer angulairement le porte-balais en fonction du couple demandé, est porté par un flasque fixe qui comporte des ouvertures oblongues traversées chacune par l'un des axes auquel est accroché un ressort spiral. Ces ouvertures sont dimensionnées de manière à permettre le déplacement desdits axes, accompagnant la rotation du porte-balais.

On peut ainsi faire varier, en fonction du couple demandé, d'une part le freinage du rotor par les balais donc la vitesse à vide du moteur électrique, et d'autre part le "calage" des balais, dont la modification permet également de faire varier la vitesse du moteur, ainsi que le couple disponible en fonction du couple demandé.

Quelle que soit l'action exercée par la couronne du réducteur sur les balais, il convient que cette couronne soit, à tout instant, positionnée angulairement selon le couple à fournir. A cet effet, les moyens sensibles au couple demandé au moteur électrique, et ajustant la position angulaire de la couronne externe du réducteur épicycloïdal, comprennent dans une forme de réalisation particulière un piston monté coulissant dans un logement allongé, suivant une direction tangentielle par rapport à la couronne, et pourvu d'une crémaillère latérale en prise avec une denture extérieure de ladite couronne, au moins un ressort étant prévu pour agir sur chaque extrémité du piston. Il peut s'agir d'un ressort unique assurant la compensation du couple, ou en variante d'un double ressort, avec à chaque extrémité du piston un premier ressort asservissant la pression et/ou la position des balais en fonction du couple demandé, et un second ressort à fonction d'absorbeur de chocs.

Ce mécanisme "linéaire" peut, dans une autre variante, être remplacé par un ensemble rotatif équivalent, comprenant un pignon monté sur une barre de torsion et venant en prise avec une denture extérieure de la couronne du réducteur épicycloïdal.

De toute façon, l'invention sera mieux comprise à l'aide de la description qui suit, en référence au dessin schématique annexé représentant, à titre d'exemples non limitatifs, une forme de réalisation de ce démarreur électrique, ainsi qu'une variante :

Figure 1 est une vue partielle, en coupe longitudinale, d'un

5

démarreur électrique à réducteur épicycloïdal, conforme à l'invention, avec asservissement de la seule pression des balais sur le collecteur ;

Figure 2 est une vue partielle de ce démarreur, montrant notamment les balais avec les ressorts spiraux associés ;

Figure 3 est une autre vue partielle montrant le train épicycloïdal, ainsi que le mécanisme d'ajustement de position angulaire de la couronne dentée du réducteur ;

Figure 4 montre un détail de figure 3, dans une forme de réalisation particulière ;

Figure 5 est une vue partielle en coupe longitudinale de la région du réducteur et du collecteur d'un autre démarreur conforme à l'invention, dans le cas d'une variante avec asservissement simultané de la pression et de la position des balais ;

Figure 6 est une vue partielle montrant les différents pignons en prise avec la couronne dentée du réducteur, dans le cas de la variante selon figure 5.

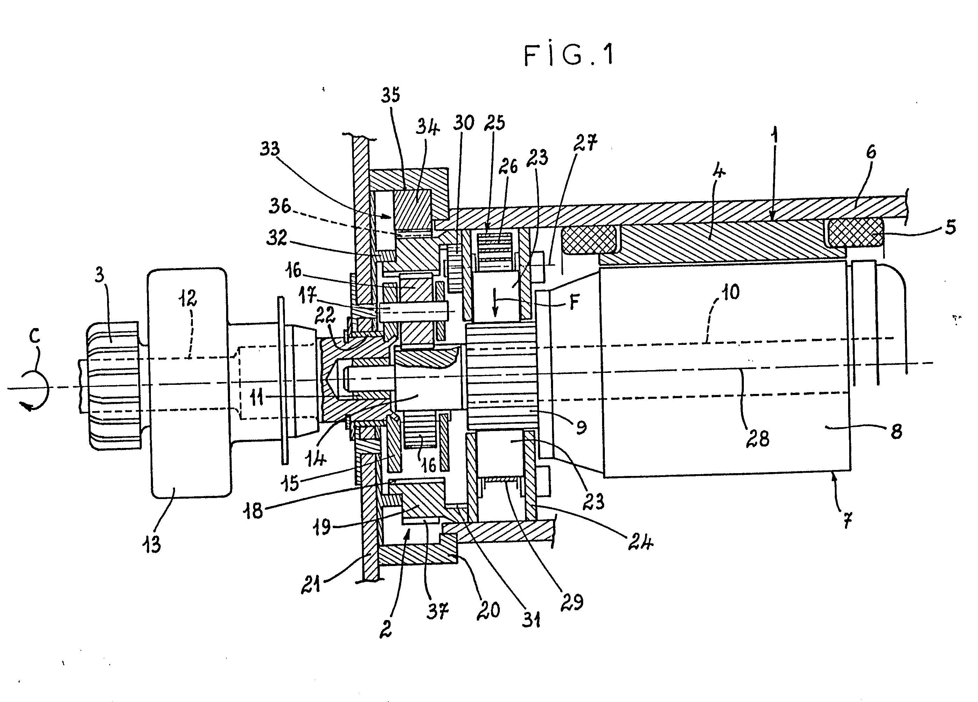

La figure 1 montre un démarreur de véhicule automobile, représenté partiellement avec son moteur électrique 1, avec son réducteur de vitesse 2 et avec son lanceur 3.

Le moteur électrique 1 comprend un stator avec des pôles 4 entourés de bobines inductrices 5 et montés sous une carcasse tubulaire 6 ; le rotor 7 comprend un induit 8 et un collecteur à lames 9 du type "tambour", calés sur un arbre de rotor 10. Une extrémité de l'arbre de rotor 10 est centrée par l'intermédiaire d'un coussinet 11 sur un autre arbre 12 qui lui est coaxial et qui porte le lanceur 3 du démarreur avec son entraîneur 13. Le collecteur 9 est situé du côté du réducteur de vitesse 2, lequel assure la transmission entre l'arbre 10 du rotor 7 et l'arbre 12 du lanceur 3.

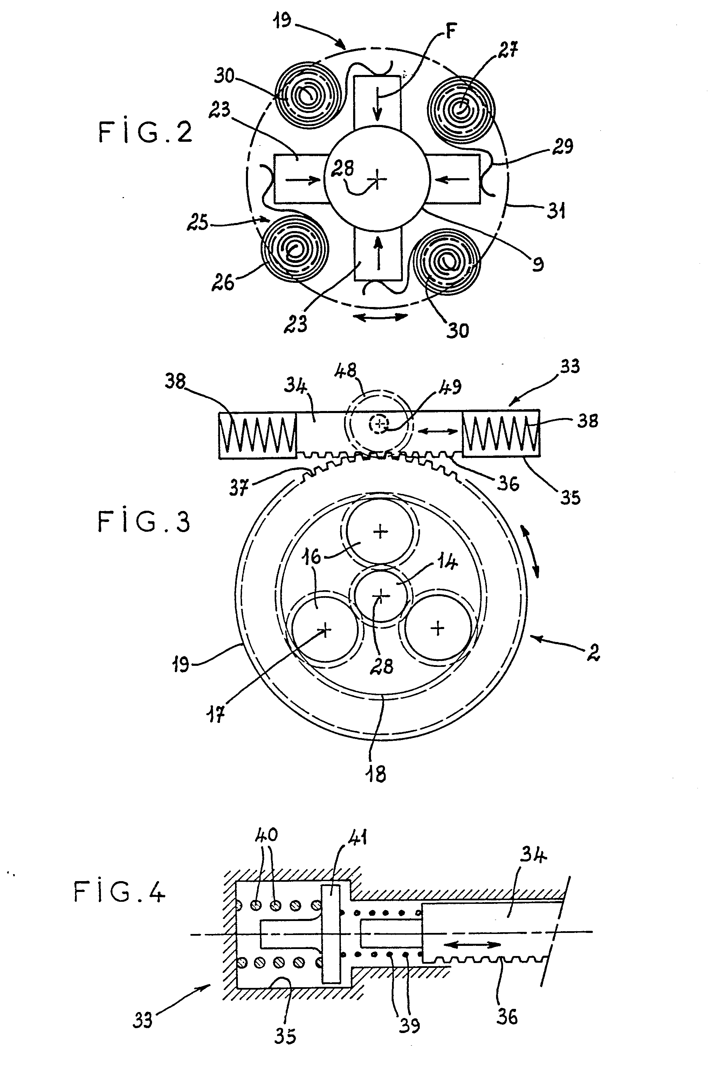

Ce réducteur 2, du type épicycloïdal, comprend un pignon central ou "planétaire" 14 porté par l'arbre de rotor 10, et un porte-satellites 15 solidaire de l'arbre 12 du lanceur 3. Les pignons satellites 16, montés tournants autour d'axes excentrés 17, sont par exemple au nombre de trois - voir aussi figure 3. Ces pignons satellites 16 engrènent avec le planétaire 14, et ils viennent aussi en prise avec une première denture intérieure 18 d'une couronne externe 19.

Les engrenages du réducteur épicycloïdal 2 sont logés à l'intérieur d'un carter auxiliaire 20 qui prolonge la carcasse tubulaire 6 du moteur

6

électrique 1, et qui se raccorde à une plaque de base 21 supportant un palier 22 pour l'arbre 12 du lanceur 3 et pour le porte-satellites 15.

Autour du collecteur 9 du moteur électrique 1, sont disposés des balais 23 par exemple au nombre de quatre, logés et guidés dans un porte-balais 24 lui-même monté à l'intérieur de la carcasse 6. Comme le montre plus particulièrement la figure 2, chaque balai 23 est pressé élastiquement contre le collecteur 9 au moyen d'un ressort spiral plat 25. Le ressort spiral 25 comporte une partie principale 26 enroulée en plusieurs spires autour d'un axe 27 décalé latéralement par rapport au balai 23 associé, l'axe 27 étant parallèle à l'axe général 28 du moteur électrique 1. La spire la plus extérieure du ressort spiral 25 se prolonge par une partie 29 cintrée en sens inverse et appliquée contre la face postérieure du balai 23, pour exercer sur ce balai une force de poussée F, correspondant à la force de pression du balai 23 sur le collecteur 9.

La spire la plus intérieure du ressort 25 comporte un bec d'accrochage plié vers l'intérieur, et introduit dans une fente de l'axe 27. Cet axe 27 traverse les flasques du porte-balais 24 avec possibilité de rotation, et il porte un pignon 30 à son extrémité située à l'extérieur du porte-balais 24 du côté du réducteur 2. Au total, quatre pignons 30 sont ainsi disposés concentriquement autour de l'axe général 28 du moteur électrique 1, en regard du réducteur 2.

Tous les pignons 30 sont en prise avec une deuxième denture intérieure 31 de la couronne 19 appartenant au réducteur 2, et peuvent être entraînés en rotation simultanément par cette couronne 19, qui est montée non pas fixe, mais tournante à l'intérieur du carter auxiliaire 20, le guidage en rotation de la couronne 19 étant assuré par une pièce interne 32 fixée à la plaque de base 21.

La position angulaire de la couronne 19 est contrôlée par un mécanisme désigné dans son ensemble par 33, et logé aussi sous le carter auxiliaire 20, ce mécanisme 33 étant bien visible sur la figure 3. Le mécanisme 33 comprend un piston 34, monté coulissant suivant une direction tangentielle dans un logement allongé 35. Le piston 34 est pourvu latéralement d'une crémaillère 36, qui vient en prise avec une troisième denture 37, celle-ci extérieure, de la couronne 19. Contre chaque extrémité du piston 34 est appuyé au moins un ressort hélicoïdal 38, également monté dans le logement 35.

En cours de fonctionnement, compte tenu du montage décrit précédemment, la couronne dentée externe 19 occupera à tout instant une position d'équilibre déterminée par le couple C demandé au moteur 1, par les poussées des ressorts 38 transmises par l'intermédiaire du piston 34 et sa crémaillère 36, et par les pressions des ressorts spiraux 25 associés aux balais 23, transmises par les pignons 30. Le point d'équilibre de tout ce système mécanique peut être défini en fonction de la pression optimale des balais 23, elle-même choisie, pour le couple d'entraînement du moteur à combustion interne, en fonction d'un critère retenu tel que : puissance maximale du moteur électrique 1, rendement le plus élevé au point de fonctionnement, moindre usure de l'ensemble collecteur 9 - balais 23, etc...

A partir de ce point de fonctionnement, toute modification du couple demandé C entraîne une variation de la position d'équilibre de la couronne 19 et, en conséquence, une modification de la force de poussée F de chaque balai 23 sur le collecteur 9. Par exemple, si le couple demandé C augmente, ce qui se traduit par une résistance plus forte à l'entraînement de l'arbre 12 du lanceur 3 solidaire du porte-satellites 15, le planétaire 14 tend à faire tourner la couronne 9 dans un sens déterminé, par l'intermédiaire des pignons satellites 16. La rotation de la couronne 19 provoque alors, par l'intermédiaire de la deuxième denture intérieure 31 de cette couronne, une rotation de tous les pignons 30 dans le même sens, tendant plus fortement tous les ressorts spiraux 25 et occasionnant une augmentation de la force de poussée F de tous les balais 23 sur le collecteur 9. La couronne 19 et les organes entraînés par celle-ci sont déplacés jusqu'à ce qu'un nouveau point d'équilibre soit atteint. Bien entendu, l'ajustement s'effectue en réalité de manière continue dans le temps, et il intervient dans un sens ou dans l'autre, selon que le couple demandé C augmente ou diminue, ce qui réalise un asservissement de la pression des balais 23 sur le collecteur 9. En particulier, si le couple demandé C diminue au lieu d'augmenter, la force de pression des balais 23 peut diminuer si l'on se place toujours dans le même exemple, ce qui réduit les pertes mécaniques et permet une meilleure accélération du moteur électrique 1.

Il est aussi possible d'obtenir un effet contraire, à savoir une augmentation de la pression des balais 23 sur le collecteur 9 lorsque le couple demandé C diminue, contribuant au freinage du rotor 7. Cet effet inverse est obtenu sans modifier l'agencement du réducteur 2 et de l'ensemble des engrenages, simplement en inversant le sens d'enroulement

8

des ressorts spiraux 25 associés aux différents balais 23, de telle sorte que l'entraînement en rotation des axes 30 dans un sens donné provoque la détente des ressorts spiraux 25 et non plus le renforcement de leur tension.

Un effet supplémentaire d'absorption des chocs est obtenu avec la disposition selon la figure 4, où chaque ressort du mécanisme 33 est remplacé par deux ressorts hélicoïdaux 39 et 40. Le premier ressort 39, appuyé contre l'extrémité du piston 34, est déterminé en fonction du couple de fonctionnement du moteur électrique 1, et intervient à titre principal pour asservir la pression des balais 23. Un piston auxiliaire 41 est intercalé entre le premier ressort 39 et le second ressort 40, qui est déterminé en fonction d'un couple multiple du précédent, et joue un rôle d'absorbeur de chocs.

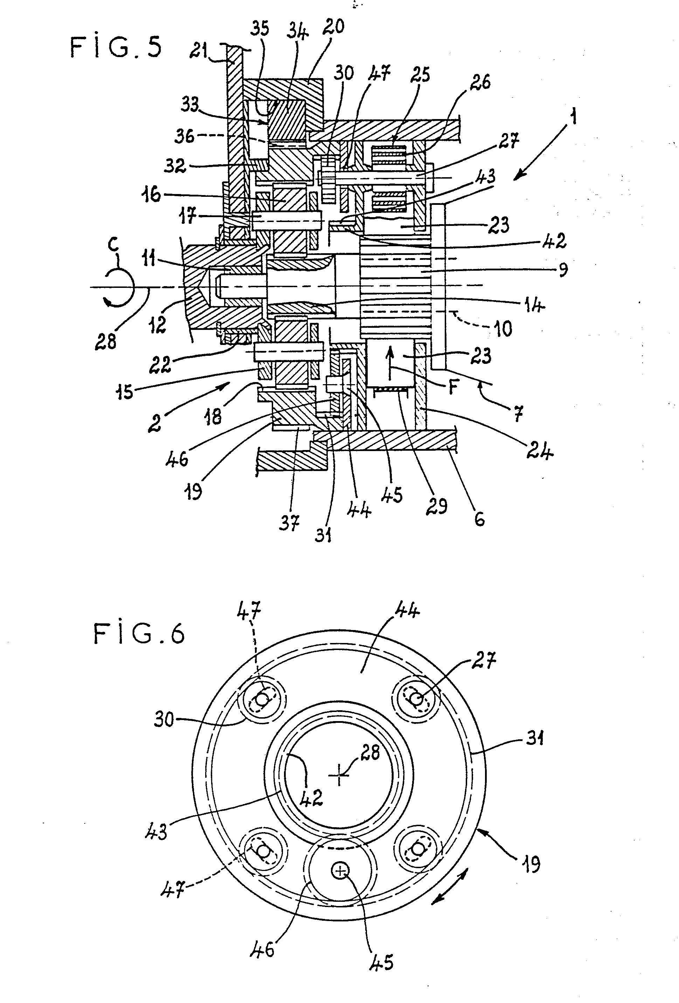

Les figures 5 et 6 sont relatives à une variante de réalisation, dans laquelle s'ajoute, à l'effet d'ajustement de la force de poussée F sur les balais 23, un asservissement de la position angulaire de ces balais 23.

La structure du réducteur épicycloïdal 2, et le mécanisme de commande de rotation des axes 27 sur lesquels sont accrochés les ressorts spiraux 25 agissant sur les balais 23, ne sont pas modifiés par rapport à la précédente forme de réalisation, tous les éléments correspondants étant désignés par les mêmes repères et n'étant pas décrits une nouvelle fois.

Le porte-balais 24 est ici monté tournant autour de l'axe 28, à l'intérieur de la carcasse 6, et il se prolonge, du côté du réducteur 2, par une partie annulaire 42 pourvue d'une denture extérieure 43. Entre le porte-balais 24 et le réducteur 2, est monté un flasque 44, immobilisé à l'intérieur de la carcasse 6. Le flasque 44 porte un axe 45, sur lequel est monté tournant un pignon supplémentaire 46 qui est en prise, d'une part, avec la deuxième denture intérieure 31 de la couronne 19, et d'autre part, avec la denture 43 de la partie annulaire 42 solidaire du porte-balais 24.

Le flasque 44 comporte quatre ouvertures oblongues 47 situées sur un même cercle et traversées chacune par l'un des axes 27 portant un pignon 30 et lié à l'un des ressorts spiraux 25.

Le système occupant comme précédemment une certaine position d'équilibre, toute modification du couple C demandé au moteur électrique 1 provoque, d'une part, une modification de la pression des balais 23 sur le collecteur 9 et, d'autre part, un décalage angulaire des mêmes balais 23 par rapport à leur position initiale. Une variation du couple demandé C modifie la position angulaire de la couronne 19, qui par sa deuxième denture

9

intérieure 31 entraîne en rotation simultanément tous les pignons 30, associés aux ressorts spiraux 25, ainsi que le pignon supplémentaire 46. La rotation des pignons 30 provoque, selon son sens, une augmentation ou une diminution de la tension des ressorts 25, donc de la pression des balais 23. La rotation du pignon supplémentaire 46 provoque, par l'intermédiaire de la denture 43, une modification de position angulaire du porte-balais 24, donc un déplacement angulaire des balais 23. Les ouvertures oblongues 47 du flasque 44 permettent aux axes 27 de décrire, sans rencontrer d'obstacle, le même déplacement angulaire que les balais 23 autour de l'axe 28.

Il est à noter que, dans la variante qui vient d'être décrite, le réglage de la pression des balais 23 est effectué de manière "différentielle", la rotation des axes 27 liés aux ressorts spiraux 25 étant un mouvement composé, fonction d'une part de la rotation propre des pignons 30, et d'autre part du déplacement angulaire du porte-balais 24.

Il va de soi que l'invention ne se limite pas aux seules formes de réalisation de ce démarreur électrique à réducteur épicycloïdal qui ont été décrites ci-dessus, à titre d'exemples ; elle en embrasse, au contraire, toutes les variantes respectant le même principe, dans la limite des moyens équivalents. C'est ainsi que le mécanisme 33 à piston 34 et ressorts 38 est remplaçable par un pignon 48 monté sur une barre de torsion 49 et venant en prise avec la denture extérieure 37 de la couronne 19 - voir le tracé en traits mixtes de la figure 3 indiquant une telle variante.

0236239

10

## REVENDICATIONS

1. Démarreur électrique à réducteur épicycloïdal, pour le lancement d'un moteur à combustion interne et, plus particulièrement, d'un moteur de véhicule automobile, ce démarreur comprenant un moteur électrique (1) entraînant en rotation un lanceur (3) par l'intermédiaire d'un réducteur de vitesse (2) comprenant un planétaire (14) engrenant avec des satellites (15) liés à un porte-satellites (16) et eux-mêmes en prise avec une denture intérieure (18) d'une couronne externe (19), le planétaire (14) et le porte-satellites (16) étant portés l'un par l'arbre (10) du moteur électrique (1) et l'autre par l'arbre (12) du lanceur (3), l'arbre (10) du moteur électrique (1) portant, du côté du réducteur (2), un collecteur (9) sur lequel sont appliqués des balais (23) poussés par des ressorts (25), caractérisé en ce que la couronne externe (19) du réducteur épicycloïdal (2) est montée tournante autour de son axe (28) et se trouve accouplée, d'une part, à des moyens (33) sensibles au couple (C) demandé au moteur électrique (1), et d'autre part, au support (24,27) des balais (23) et/ou de leurs ressorts (25), de manière à modifier la pression (F) des balais (23) sur le collecteur (9) par l'intermédiaire d'une rotation de ladite couronne (19), en fonction du couple (C) demandé au moteur électrique (1).

2. Démarreur électrique à réducteur épicycloïdal selon la revendication 1, caractérisé en ce que la couronne externe (19) du réducteur épicycloïdal (2) est accouplée aux ressorts (25) associés aux balais (23) de telle sorte qu'une diminution du couple (C) demandé au moteur électrique (1) s'accompagne d'une diminution de la pression (F) des balais (23) sur le collecteur (9).

3. Démarreur électrique à réducteur épicycloïdal selon la revendication 1, caractérisé en ce que la couronne externe (19) du réducteur épicycloïdal (2) est accouplée aux ressorts (25) associés aux balais (23) de telle sorte qu'une diminution du couple (C) demandé au moteur électrique (1) s'accompagne d'une augmentation de la pression (F) des balais (23) sur le collecteur (9).

4. Démarreur électrique à réducteur épicycloïdal selon l'une quelconque des revendications 1 à 3, dans lequel les balais (23) sont poussés contre le collecteur (9) du moteur électrique (1) au moyen de ressorts spiraux (25), une extrémité de chaque ressort spiral (25) étant accrochée sur un axe (27), caractérisé en ce que chaque axe (27) auquel est accroché un ressort spiral (25) est monté tournant sur le porte-balais (24) et porte un pignon (30), tous les pignons (30) étant en prise avec une denture intérieure supplémentaire (31) de la couronne externe (19) du réducteur épicycloïdal (2).

5. Démarreur électrique à réducteur épicycloïdal selon l'une quelconque des revendications 1 à 4, caractérisé en ce que la couronne externe (19) du réducteur épicycloïdal (2) est accouplée aux supports (24,27) des balais (23) et de leurs ressorts (25), de manière à modifier simultanément la pression (F) des balais (23) sur le collecteur (9) et la position angulaire de ces balais (23), en fonction du couple (C) demandé au moteur électrique.

6. Démarreur électrique à réducteur épicycloïdal selon l'ensemble des revendications 4 et 5, caractérisé en ce que le porte-balais (24) est monté tournant autour de l'axe (28) du moteur électrique (1) et est pourvu d'une denture coaxiale (43), et en ce qu'il est prévu au moins un pignon intermédiaire (46) en prise d'une part avec cette dernière denture (43), et d'autre part avec la denture intérieure supplémentaire (31) de la couronne externe (19) du réducteur épicycloïdal (2), de manière à déplacer angulairement le porte-balais (24) en fonction du couple demandé (C).

7. Démarreur électrique à réducteur épicycloïdal selon la revendication 6, caractérisé en ce que l'axe (45) du ou de chaque pignon intermédiaire (46), servant à déplacer angulairement le porte-balais (24) en fonction du couple demandé (C), est porté par un flasque fixe (44) qui comporte des ouvertures oblongues (47) traversées chacune par l'un des axes (27) auquel est accroché un ressort spiral (25).

8. Démarreur électrique à réducteur épicycloïdal selon l'une quelconque des revendications 1 à 7, caractérisé en ce que les moyens (33) sensibles au couple (C) demandé au moteur électrique (1), et ajustant la position angulaire de la couronne externe (19) du réducteur épicycloïdal (2), comprennent un piston (34) monté coulissant dans un logement allongé (35), suivant une direction tangentielle par rapport à la couronne (19), et pourvu d'une crémaillère latérale (36) en prise avec une denture extérieure (37) de ladite couronne (19), au moins un ressort (38) étant prévu pour agir sur chaque extrémité du piston (34).

9. Démarreur électrique à réducteur épicycloïdal selon la revendication 8, caractérisé en ce qu'il est prévu, à chaque extrémité du piston (34), un premier ressort (39) asservissant la pression et/ou la position des balais (23) en fonction du couple demandé (C), et un second ressort (40) à fonction d'absorbeur de chocs.

10. Démarreur électrique à réducteur épicycloïdal selon l'une quelconque des revendications 1 à 7, caractérisé en ce que les moyens (33) sensibles au couple (C) demandé au moteur électrique (1), et ajustant la position angulaire de la couronne externe (19) du réducteur épicycloïdal (2), comprennent un pignon (48) monté sur une barre de torsion (49) et venant en prise avec une denture extérieure (37) de ladite couronne (19).

0236239

FIG.1

FIG.2

FIG.3

FIG.4

0236239

FIG.5

FIG.6

Office européen
des brevets

**RAPPORT DE RECHERCHE EUROPEENNE**

## DOCUMENTS CONSIDERES COMME PERTINENTS

| Catégorie | Citation du document avec indication, en cas de besoin, des parties pertinentes | Revendication concernee | CLASSEMENT DE LA DEMANDE (Int Cl⁴) |
|---|---|---|---|
| A | PATENT ABSTRACTS OF JAPAN, vol. 8, no. 155 (E-256)[1592], 19th July 1984; & JP-A-59 56 839 (NIPPON DENSO K.K.) 02-04-1984 * Abrégé * | 1 | F 02 N 15/06<br>F 02 N 11/00<br>H 02 K 23/66<br>H 02 K 23/18 |
| | --- | | |
| A | GB-A-2 161 031 (HONDA GIKEN KOGYO) | | |
| | --- | | |
| A | FR-A-2 527 394 (MITSUBISHI) | | |
| | --- | | |
| A | US-A-4 108 015 (YANKE) | | |
| | ----- | | |

**DOMAINES TECHNIQUES RECHERCHES (Int. Cl.⁴)**

F 02 N
H 02 K

Le présent rapport de recherche a été établi pour toutes les revendications

| Lieu de la recherche | Date d'achèvement de la recherche | Examinateur |
|---|---|---|
| LA HAYE | 22-05-1987 | BIJN E.A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03.82